# EUROPEAN PATENT APPLICATION

(11) **EP 3 150 446 A1**
(43) Date of publication of application: **05.04.2017**
(21) Application number: 15187884.0
(22) Date of filing: 01.10.2015
(51) Int. Cl.: B60R 21/34, B62D 25/16

(54) **A VEHICLE SAFETY SYSTEM AND A METHOD FOR ADJUSTING A VEHICLE SAFETY SYSTEM**

(71) Applicant: Volvo Car Corporation, 40 531 Göteborg (SE)
(72) Inventor: Lindmark, Peter, 42243 Hisings Backa (SE); Fredin, Kaj, 44275 Lycke (SE)
(74) Representative: Volvo Car Corporation

(57) **Abstract**

The disclosure relates to an impact safety system for a vehicle (1) and a method for adapting an impact safety system (10) as a function of a sensor (3). The impact safety system comprises a body element (5, 25) and a body element support arrangement (15, 20, 30) adapted to rigidly support the body element (5, 25). A connection element is arranged in working cooperation with the body element support arrangement (15, 25, 30) and is configured to have a controllable stiffness. By having a controllable stiffness, the behaviour of the impact safety system can be controlled and adapted to a specific traffic environment, or situation which relates to the ambient environment of the vehicle.

## Description

### TECHNICAL FIELD

An impact safety system for a vehicle, the impact safety system is adapted to control the stiffness of connection element associated with a body element.

### BACKGROUND

One problem which existing vehicle running in traffic is faced with today is the complex traffic situations. Traffic situations may vary from stand still positions to high speed in trafficked environment, trafficked by both other vehicles, pedestrians, obstructing objects such as buildings, road work equipment etc. Due to the complexity of the traffic situations, a vehicles system needs to be very versatile and adaptable, while at the same time being reproducible using a large scale manufacturing methods in terms of being cheap enough and compatible with existing vehicle systems.

One example of an adaptable vehicle system is disclosed in the published US patent application no. US 2011/0272254 A1 assigned to MillenWorks, Inc. The document discloses a system for adjusting the compliance of a wheel. Wheel segments are adjusted so that the stiffness of the wheel can be adjusted even when the vehicle is in motion. One reason is to counteract vehicle pitch and heave vibrations. Another adaptable vehicle system is disclosed in the published international patent application no. WO 2015/004676 A1 assigned to KPIT Technologies Limited. The disclosure relates to a dynamically adjustable suspension device by which the stiffness of the suspension may be adjusted.

Together with the challenges of complying with national or regional legislations are the prospects of providing better and improved vehicles. One area which deserves specific attention is pedestrian safety and specifically vehicle systems relating to pedestrian safety. During a normal every day traffic situation, a vehicle travels at different speeds, and through different environments. Each speed, which can be defined by the speed limit for that road section, imposes the vehicle with different requirements from a safety perspective. For example, a vehicle driving at slow speed is susceptible for some desired properties, while a vehicle driving at high speed is susceptible for other desired properties. There is thus a need for a vehicle safety system which is versatile and adaptable, and which can operate in the complex environment provided by the traffic and other road users.

### SUMMARY

It is in object of the present disclosure to provide an impact safety system for a vehicle which is versatile and adaptable, and which at least reduce the drawbacks of the known prior art, or to provide a useful alternative. The object is at least partly met by an impact safety system comprising a body element and a body element support arrangement adapted to support the body element, preferably rigidly support the body element. The body element support arrangement comprises a connection element arranged in working cooperation with the body element support arrangement. The impact safety system further comprises an electronic control unit (ECU) and at least one sensor. The connection element is formed by a material with controllable stiffness, and the electronic control unit is adapted to control the stiffness of the connection element as a function of a signal from said sensor.

The impact safety system provides a versatile and adaptable vehicle safety system by permitting the ECU to control the stiffness of the connection element as a function of a signal from the sensor. The stiffness can thus be controlled to a specific traffic situation, vehicle status, vehicle speed, or similar. It has the advantage of connecting a material property of an element which is associated with a body element of a vehicle, to an operating system. By adjusting the stiffness, the connection element can be adjusted to be stiff, or less stiff, which in the end determines how the connection element behaves during a collision or when an object impacts on the vehicle and the specific body element.

The ECU may be adapted to control the stiffness of the connection element as a function of a signal from a vehicle related sensor or an ambient environment related sensor. The control of the stiffness of the connection element may be improved by combining different types of sensors. Existing sensor of the vehicle may be used for example.

The material with controllable stiffness may be based on a first material embedded in a second material. The material with controllable stiffness may thus be a composite, a mix of two or more materials. Advantageously the material with controllable stiffness is embedded or encapsulated in a second support material. The support material may provide structural integrity to the first material, i.e. the material with controllable stiffness

The impact safety system comprises a power source. The power source is isolated from the vehicle powers source. By this is meant that the power source does not interact, or rely on the vehicles own power source. The stiffness of the connection element can thus be controlled without draining the vehicles energy source, such as the 12V batteries, or the propulsion battery system. The impact safety system may comprise an electrical current source such as a battery for example. More specifically, by having a unique power source, or isolated power source, the power source may be specifically adapted to change the stiffness of the connection element.

The impact safety system may be connected to an electrical current source such as a vehicle battery system. The connection to the electrical current source such as a vehicle battery system may be in addition or as an option to an isolated power source as described above.

The electrical current source may be formed by a battery isolated from the vehicle battery system.

The body element may be a vehicle body element. The body element may be an exterior body element, such as a bonnet, fender, trunk, door, grille, roof or the like, or portions thereof. Optionally or additionally the body element may be an interior body element, such as a dashboard, side panel, or the like, or portions thereof. The impact safety system disclosed herein may be implemented in a variety of different parts of the vehicle. It has been found to be specifically suitable for applications concerning the exterior vehicle body as these are the first line of defense during a collision or similar.

The body element may be a bonnet. The body element support arrangement may be a pivot arrangement arranged to the bonnet or a bump stop. The connection element may be an element of the pivot arrangement or bump stop. The body element may optionally or additionally be a grille.

The connection element is advantageously a mechanical fastening element, preferably a connection pin. Suitable mechanical fastening elements are pins, bolts, screws, rivets or the like. By implementing a controllable stiffness on a mechanical fastening element such as a connection pin, the material costs may be kept low while the adaptability is still kept relatively high.

The stiffness may be controlled as a function of the vehicle speed. By relating the stiffness to the vehicle speed, the impact safety system becomes a reliant and versatile system adaptable to different traffic scenarios. Optionally or additionally, the stiffness can be controlled as a function of a detected possible collision.

The electronic control unit may be adapted to communicate with a vehicle on board computer.

Further encompassed by the disclosure is a method for adapting an impact safety system as a function a sensor. The impact safety system comprises a body element and a body element support arrangement adapted to rigidly support the body element. The body element support arrangement comprises a connection element arranged in working cooperation with the body element support arrangement. The impact safety system further comprising an electronic control unit and at least one sensor. The connection element is formed by a material with controllable stiffness, and in that the electronic control unit is adapted to control the stiffness of the connection element as a function of a signal from the sensor.

The method provides an adaptable system which can specifically adapt how a body element behaves during an impact with an object. The method provides a versatile and adaptable vehicle safety system by permitting the ECU to control the stiffness of the connection element as a function of a signal from the sensor. The stiffness can thus be controlled to a specific traffic situation, vehicle status, vehicle speed, or similar. It has the advantage of connecting a material property of an element which is associated with a body element of a vehicle, to an operating system. By adjusting the stiffness, the connection element can be adjusted to be stiffer, or less stiff, which in the end determines how the connection element behaves during a collision or when an object impacts on the vehicle and the specific body element.

The at least one sensor may be a vehicle related sensor or an ambient environment related sensor. Combinations of these sensors are of course also possible.

The method may further comprise the step of; controlling the stiffness of at least two connection elements. The stiffness of said at least two connection elements may be controlled to be different from each other. Larger systems may be controlled in this manner.

The disclosure relates to an impact safety system for a vehicle and a method for adapting an impact safety system as a function of a sensor. The impact safety system comprises a body element and a body element support arrangement adapted to rigidly support the body element, and preferably the position of the body element. A connection element is arranged in working cooperation with the body element support arrangement and is configured to have a controllable stiffness. By having a controllable stiffness, the behavior of the impact safety system can be controlled and adapted to a specific traffic environment, or situation which relates to the ambient environment of the vehicle.

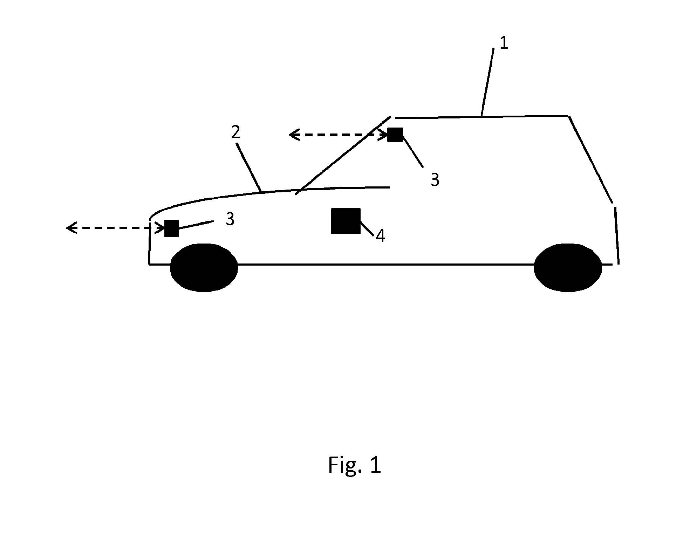

### (Figure 1 for publication)

### BRIEF DESCRIPTION OF THE DRAWINGS

Non-limiting embodiments of the present invention will be described in greater detail with reference to the accompanying figures in which;
figure 1 shows a vehicle having an impact safety system;
figure 2 a first embodiment of an impact safety system having a bonnet as body element and mechanical fastening element as connection element, the impact safety system is related to a pivot arrangement for the bonnet;
figure 3 a second embodiment of an impact safety system having a bonnet as body element and mechanical fastening element as connection element, the impact safety system is related to a bump stop for the bonnet;
figure 4 a second embodiment of an impact safety system having a grille as body element and mechanical fastening element as connection element, the impact safety system is related to a grille supporting arrangement for a grille;

### DETAILED DESCRIPTION

Figure 1 shows a vehicle 1 having a body 2 and a vehicle sensor system 3. The vehicle sensor system comprises at least one sensor and an electronic control unit 4 configured to communicate and process the sensor signals.

A body of a vehicle, like the body 2, may include body elements such as a bonnet, fenders, a roof, side doors, the rear truck door, grille or the like. During a collision with another vehicle or a pedestrian, a portion of the body is generally the impact receiving portion of the vehicle 1. The present disclosure relates to an impact safety system for a vehicle, such as the vehicle 1. The vehicle 1 may be provided with one or more impact safety systems. The impact safety system comprises a body element and a body element support arrangement as will be described in greater detail below.

The vehicle 1 comprises one or more sensors 3 communicating with an electronic control unit 4, ECU. The vehicle sensor system 3 is adapted to identify or detect; a vehicle, an object, a pedestrian, an impact scenario or the like, which could affect physically impact with the vehicle 1. The impact safety system is intended to identify a situation or a scenario in which the vehicle 1 may be subjected to a predictable amount of crash violence. The impact safety system then adapts to the predictable amount of crash violence which the vehicle 1 may be subjected to.

As a function of a detected scenario, a measured parameter or the like, the impact safety system adjusts the stiffness of a connection element of the body element support arrangement so that the impact properties of the body element, i.e. the manner in which the body element can withstand and react to a load subjected to the body element, is changed. If the connection element is stiff, the body element support arrangement will be able to withstand a higher amount of load. If the connection element is adjusted to be softer, the body element support arrangement will be able to withstand a lower amount of load.

The sensors may be one or more sensors, such as two or more, three or more. The sensor(s) may be utilizing electromagnetic radiation such as a radar-operated sensor, it may be an imaging sensor such as a camera, a conventional TV camera, infrared camera, digital camera, light based sensors such as a laser, infra-red or UV light sensor. It may include a video image processor (VIP) which generally is a combination of hardware and software which extracts desired information from data provided by an imaging sensor for example. The sensors may be active or passive.

As example of an active sensor is an active infrared sensor. An active infrared sensor operates by transmitting energy from either a light emitting diode (LED) or a laser diode. An LED is used for a non-imaging active IR detector, and a laser diode is used for an imaging active IR detector. In both types of detectors the LED or laser diode illuminates the target, and the reflected energy is focused onto a detector consisting of a pixel or an array of pixels. A passive infrared system detects energy emitted by objects in the field of view and may use signal-processing algorithms to extract the desired information. It does not emit any energy of its own for the purposes of detection.

A radar based sensor such as microwave radar, operates by measuring the energy reflected from target vehicles within the field of view. Other types of sensors are photoelectric devices which commonly consist of two components, the light source and the detector. These may both be in the same place, or placed across from each other. When placed across from each other, the detector is activated whenever something obstructs the illumination from the light source.

The vehicle 1 may further be provided with a vehicle-to-vehicle communication unit. The sensors may be adapted to monitoring adjacent lanes of the road, primarily adjacent lanes in front of the vehicle 1, for detecting the relative approach of road users in the adjacent lanes to the vehicle and for detecting road users driving in the same direction as the vehicle 1.

The sensors 3 may be one or more vehicle related sensors, and/or one or more an ambient environment related sensor. A vehicle related sensor is a sensor which detects or measures a property of the vehicle itself. A vehicle related sensor may be one or more sensors related to; suspensions, brakes, throttle, acceleration, retardation, kinematics, compliances, rollover thresholds, inertias, mass center location, or similar. An ambient environment related sensor is a sensor which detects or measures a property or situation which relates to the ambient environment of the vehicle such as temperature, road friction, road type, snow, ice, wet road surface, vehicle to vehicle information, distance to vehicle in front, vehicle lane, status of vehicle in front, GPS information, or the like.

The impact safety system may further comprise a monitoring unit adapted to visualize e.g. the status of the impact safety system to the driver. It may further alert the driver of the vehicle 1. The alert may be a tactile alert, a visual alert, an audible alert, or combinations thereof. It can further operate as a command central for the impact safety system at which the driver may input commands, setup or adjustments to the impact safety system. The monitoring unit may be a touch screen unit.

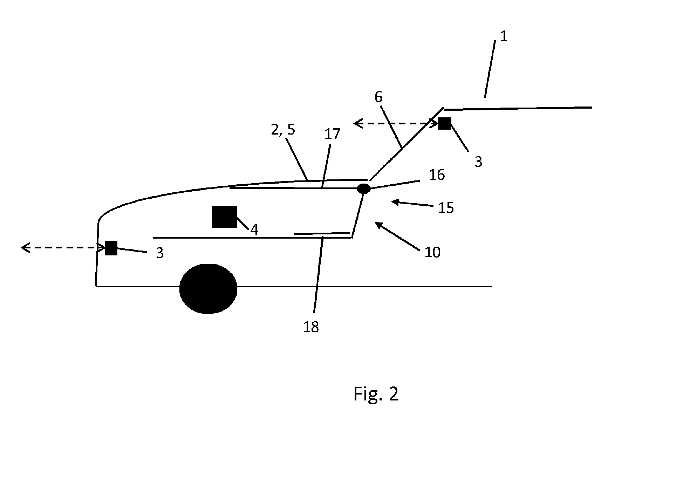

Figure 2 shows an embodiment of the impact safety system 10 in greater detail. It should of course be noted that the vehicle 1 may be provided with one or more impact safety systems, and preferably one or more impact safety systems which are associated with the same body element or with different body elements. The vehicle 1 is provided with one or more sensors 3 and an electronic control unit 4 (ECU). Figure 2 shows a portion of the vehicle 1, a portion of the body 2 in this case a bonnet 5, sometimes referred to as a hood, and a wind shield 6. The impact safety system 10 is in this case implemented on a bonnet 5 and a bonnet hinge arrangement 15, i.e. a pivot arrangement, which structurally support the bonnet 5. The body element is in this case the bonnet 5 and the body element support arrangement, in this case the bonnet hinge arrangement 15, is arranged in working cooperation with the connection element, in this case a pin 16. The pin 16 forms a pivot connection for a connection member 17 associated with the bonnet 5 and a connection member 18 associated with the chassi (not shown) of the vehicle 1. The pin 16 is formed by a material having a controllable stiffness. The connection members 17, 18 can be metal brackets for example.

By controlling the stiffness of the pin 16, the bonnet 5 may be adapted to a selected parameter e.g. the vehicle speed. If the vehicle 1 accidentally hits a pedestrian, it is desirable that the bonnet 5 and the bonnet support arrangement 15 can receive the impact from the pedestrian in a relatively soft manner. It needs to be forgiving to minimize injuries with the pedestrian. The ECU 4 may communicate with the vehicle on board computer, or directly with a speed sensor, independently the ECU 4 may impart a current to the pin 16 so as to control the stiffness to pin 16, in this case soften the pin 16. The softer pin 16 may be soft enough to either break by the shearing, or simply just to bend.

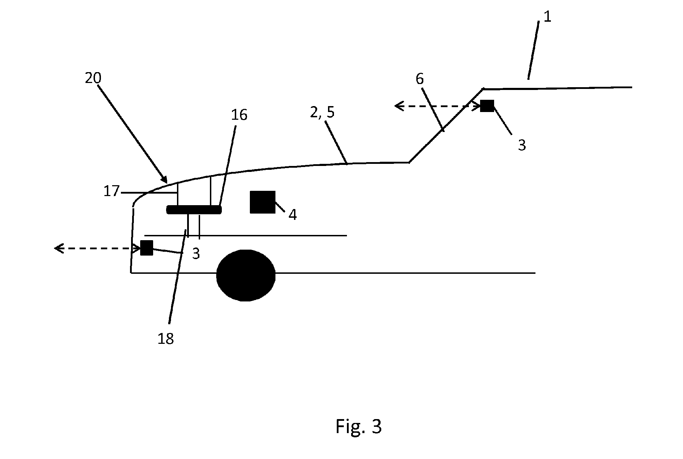

Figure 3 shows a second embodiment of an impact safety system 10. It should of course be noted that the vehicle 1 may be provided with one or more impact safety systems, and preferably one or more impact safety systems which are associated with the same body element or with different body elements. Figure 3 shows a portion of the vehicle 1, a portion of the body 2 in this case a bonnet 5, sometimes referred to as a hood, and a wind shield 6. The vehicle 1 is provided with one or more sensors 3 and an ECU 4. The impact safety system 10 is in this case implemented on a bonnet impact receiving arrangement 20, also referred to as a bump stop 20. A connection element in the form of a pin 16 is arranged between The pin 16 forms a shear point between a connection member 17 associated with the bonnet 5 and a connection member 18 associated with e.g. the chassi (not shown) of the vehicle 1.

The bum stop 20 is arranged to brace the bonnet 5 if the bonnet is subjected to crash violence such as if the vehicle 1 is accidentally hitting a pedestrian. The purpose is to prevent a pedestrian and the bonnet 5 from hitting any rigid motor element such as the engine block as such rigid elements have substantially no brace distance, i.e. they are substantially stationary as compared with the bonnet 5 which elastically deforms during an accident with a pedestrian.

If the vehicle speed is 0, it may be desirable that the pin 16 is rigid, i.e. stiff. Having a stiff pin 16 at 0 km/h permits e.g. a pedestrian to temporarily sit on the bonnet 5 without buckling the bonnet 5 affect the bump stop 20. However if the vehicle 1 is driving e.g. with a speed between about 3-15 km/h it may be desirable that the pin 16 is softer, i.e. less stiff, as compared with when the vehicle 1 is in a stand still position. The bump stop 20 is then significantly better adapted for receiving a pedestrian in case of an accident, and brace the bonnet 5 to the extent the available brace distance permits, i.e. receive and retardate a pedestrian. The stiffness of the pin 16 may be reduced enough so that it is adapted to shear off, i.e. to break. By controlling the stiffness of the connection element, the bonnet 5 and in this case the bump stop can be adaptive to the vehicle speed, or to any other suitable and selected relevant parameter.

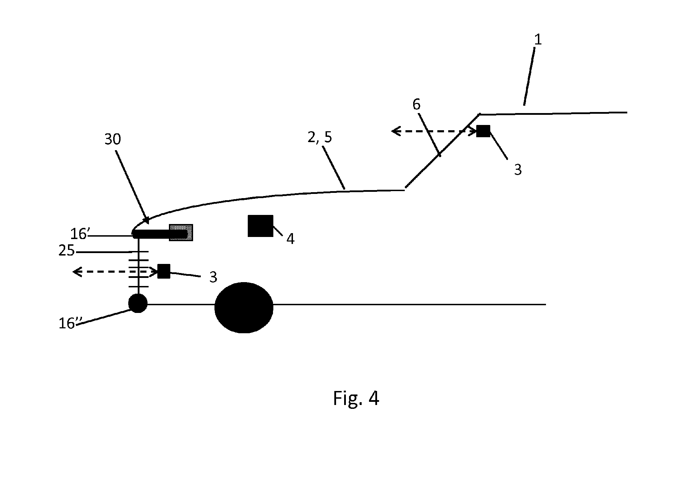

Figure 4 shows a third embodiment of an impact safety system 10. It should of course be noted that the vehicle 1 may be provided with one or more impact safety systems, and preferably one or more impact safety systems which are associated with the same body element or with different body elements. Figure 4 shows a portion of the vehicle 1, a portion of the body 2, a bonnet 5, a grille 25 and a wind shield 6. The vehicle 1 is provided with one or more sensors 3 and an ECU 4. The impact safety system 10 is in this case implemented on the grille 25. In the shown embodiment the grille 25 is attached to the chassi (not shown) of the vehicle 1, or to a similar rigid position on the vehicle 1, by the use of a first and a second connection element, in this case by a first and a second pin 16', 16". The body element support arrangement is in figure 4 represented by the grille support arrangement 30.

The stiffness of the first and the second pins 16', 16" can be controlled in a desirable manner to enable the grille 25 to better receive an impacting body, such as a pedestrian during an accident. For example, if the one or more sensors 3 detect an imminent collision with a standing pedestrian, the first pin 16' can be made less stiff than the second pin 16". If the upper pin, i.e. the first pin 16', is less stiff than the lower pin, i.e. the second pin 16", the grille 25 will tend to be deformed into the vehicle 1 more at the upper side of the grille 25 as compared to the lower side of the grille 25 when viewed as shown in figure 4. It is thus recognized that it may be advantageous to have in impact safety system with one or more connection elements formed by a material with controllable stiffness, and that the stiffness of the connection elements may be controlled individually.

If the one or more sensors 3 detect a sitting pedestrian, the stiffness of the first and the second pin 16', 16" can be reduced to provide a grille 25 specifically adapted to such circumstances. It is thus within the boundaries of the disclosure that the impact safety systems comprises on or more connection elements with controllable stiffness.

The stiffness of each connection element of the impact safety system may be controllable individually or on a group level. For example, it may be desirable to control the stiffness on two, three, four or more connection elements simultaneously and/or to a similar stiffness. It may be that to achieve this, each individual connection element may need to be subjected to a different amount of power or heat, dependent on the configuration of the specific connection element.

It should be noted that the ECU may operate to heat the connection element, in this case the pin 16, by either directly heat the connection element or by indirectly heat the connection element, e.g. via a second element.

By controllable stiffness it is hereby meant that the elastic modulus of the material of the specific member, or a portion of the specific member, can be changed in a controllable manner. The controllable stiffness may be measured as the difference in elastic modules, hence when the material is stiff, the elastic modulus is preferably at least 10- 20 times higher than the elastic modulus of the material when the material is deemed having a softer stiffness. This is generally referred to as a relative stiffness change.

The transition time for the material should preferably be less than 1 second, more preferably <0.5 seconds, more preferably <0.1 seconds. It should be noted that even though the above mentioned intervals does not include a lower limit, zero seconds is not intended to be encompassed by the interval as it is strictly impossible to have a material which can transit between stiff and a softer stiffness, at zero transition time. The transition time can be very low however. The transition time is preferably established at a specified amount of power such as 500 mW. However by controlling the stiffness of the material as a function of the input from at least one sensor and the ECU, the transition time for the material is not as critical as first believed.

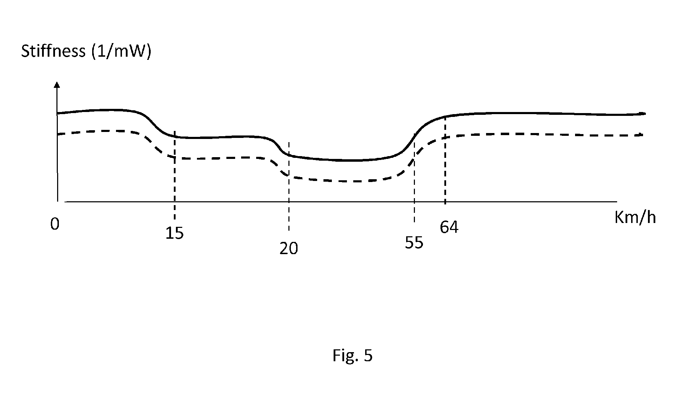

Figure 5 shows a suitable relationship between the stiffness and the vehicle speed. The stiffness can be represented by the amount of energy imparted to the connection element e.g. in mW as in figure 5 in relation to the selected parameter in this case the vehicle speed (km/h). The function and adaptability of a connection element with controllable stiffness will be described with reference to the diagram in figure 5. At low speed, e.g. up to 5 km/h, the stiffness of the connection element should be rigid permitting a user to e.g. sit on the bonnet. As the vehicle starts to move, the ECU imparts energy to the system to reduce the stiffness of the connection element to that if the vehicle accidentally hits a pedestrian, the connection element so less stiff so that the bonnet, or the relevant body element, may receive the pedestrian in a more forgiving manner. Between 20-55 m/h the impact safety system is adapted for a pedestrian upper leg and head impact. In this speed range, it is very common that if the vehicle hits a pedestrian, the pedestrian will land on the bonnet due to the speed of the vehicle. It is thus beneficial if the stiffness of the connection element is reduced as much as possible in this speed interval. As the vehicle speed increase, it becomes more and more important to protect the passengers of the vehicle itself, as the other supplementing safety systems may possibly not be enough to safe guard all the passengers. It may thus be necessary to increase the stiffness again, e.g. to its original stiffness, of the connection element. It should be noted, as mentioned above, that one or more impact safety systems may be used, and the stiffness of one or more connection elements may be controlled, i.e. adjusted to a desired stiffness.

Once the desired relationship between the stiffness of the relevant connection element(s) and the vehicle speed, or any other parameter which is selected, has been identified as shown e.g. in figure 5, it is easy to tune the impact safety system by feedback control or by trail and error.

In general, to make the impact safety system more responsive, or to tune it to a desired operative state, the connection element may be subjected to a constant energy supply, e.g. being fed with a constant current, or be heated to a base temperature. From this base level, the stiffness can be reduced further. This is indicated in figure 5 by the dashed line, slightly lowered with respect to the full line. It is also understandable that the impact safety system can be used in this way to increase the stiffness of the connection element if that would be desirable. For example, if a sensor picks up that a collision has occurred ahead of the vehicle, the impact safety system may be configured to prepare for a severe collision as the driver may be expected to brake suddenly. The impact safety system may then increase the stiffness of the one or more connection elements.

Suitable materials having a controllable stiffness to be used can be selected from the group which make use of smart fluids or shape memory materials. An example of a smart fluid material is magnetorheological (MR) or electrorheological (ER) fluids which rely on stimulus-induced ordering of nano- or micrometer-sized particles to change their viscosity.

Such smart fluids are generally encapsulated to permit the application of mechanical loads without loss of fluid. When encapsulated, the MR- or ER fluids can be used to change the mechanical properties of the supporting material. Some examples include encapsulation of MR fluids within open-celled foam or structured elastomeric cavities. Such materials can have fast transition time generally in the millisecond (ms) range. A good relative stiffness change of > 30 is possible. The absolute stiffness may of course be affected by the structure and mechanical properties of the encapsulation.

Another group of materials can be nano- or micrometer-sized particles mixed in a solid body. Such materials however have a much smaller relative stiffness change.

Another group of materials may be selected from shape memory materials, such as shape memory polymer (SMP) and shape memory alloy (SMA). Such materials are able to change stiffness through stimulus-induced changes in molecular structure such as by exposure to chemical or photo stimuli. Such materials can be operated through temperature changes.

A controllable stiffness material based on the combination of a conductive, phase-changematerial (low-melting-point alloy (LMPA)), and a soft, stretchable encapsulation layer (poly(dimethylsiloxane) (PDMS)) may optionally be used. Such material is controllable by direct heating of the LMPA microstructure. More information concerning this material is disclosed in the published article "Variable stiffness material based on rigid low-melting-point-alloy microstructures embedded in soft poly(dimethylsiloxane) (PDMS) by Bryan E. Schubert, Dario Floreanoa, published in RSC Advances, vol. 3, num. 46, p. 24671-24679 Cambridge: RSC Publishing, 2013.

According to an aspect, the connection element may be formed by a phase changing material encapsulated, or at least partly encapsulated, by a support material. By using a fully encapsulated phase changing material, the connection element may be reusable in terms of that it may be heated and then permitted to cool off. If a phase changing material is used which is partly encapsulated it can be used as a one-time stiffness change material.

Another group of materials which can be used is stiffness controllable composite materials. The composite material is preferably a coated carbon fiber with a thermoplastic polymer. The composite material is thereafter infused with an epoxy resin. The stiffness of the composite material can be changed by changing the ambient temperature so that the temperature of the composite material is raised above the glass transition temperature, the stiffness of the composite material is significantly reduced. The temperature can be raised by inducing current through the carbon fibers. The transverse stiffness of the material is especially affected and reduced. This makes this material group especially attractive for the use of connection elements such as a pin described above. The pin can be made to simply be sheared off if desirable and a much "softer" body element is provided. The material is described in greater detail in the published article "STIFFNESS-MODIFIABLE COMPOSITE FOR PEDESTRIAN PROTECTION by A. Bachingera, E. Marklunda, J. Rössler, P. Hellströma, L. E. Asp, published at ECCM16 - 16TH EUROPEAN CONFERENCE ON COMPOSITE MATERIALS, Seville, Spain, 22-26 June 2014.

Any one of the above mentioned materials may be structurally supported by a metal sheet, or a metal encapsulation, or similar, to adapted the specific material or materials to the above described application. It amount of suitable heat or electricity applied to the specific material can be finally determined using feedback control.

The connection element formed by a material with controllable stiffness may be controlled via an existing vehicle system, such as the electric system of the vehicle. Hence the vehicle energy source may be used, such as a vehicle battery for the light system or the vehicle battery for the propulsion system. The impact safety system may however be provided with its own independent power source completely separated from the electric system of the vehicle.

## Claims

1. An impact safety system for a vehicle (1), said impact safety system comprising a body element (5, 25) and a body element support arrangement (15, 20, 30) adapted to support said body element (5, 25), said body element support arrangement (15, 20, 30) comprising a connection element (16, 16',16") arranged in working cooperation with said body element support arrangement (15, 20, 30), said impact safety system further comprising an electronic control unit (ECU) and at least one sensor (3),
**characterized in that**
said connection element (16, 16',16") is formed by a material with controllable stiffness, and **in that** said electronic control unit (4) is adapted to control the stiffness of said connection element (16, 16',16") as a function of a signal from said at least one sensor (3).

2. The impact safety system according to claim 1, wherein said electronic control unit (4) is adapted to control the stiffness of said connection element (16, 16',16") as a function of a signal from a vehicle related sensor and/or an ambient environment related sensor.

3. The impact safety system according to claim 1 or 2, wherein said material with controllable stiffness is based on a first material embedded in a second material.

4. The impact safety system according to any one of the preceding claims, wherein said impact safety system (10) comprises a power source, said power source being isolated from the vehicle powers source.

5. The impact safety system according any one of the preceding claims, wherein said impact safety system (10) is connected to an electrical current source such as a vehicle battery system.

6. The impact safety system according to claim 4 or 5, wherein said electrical current source is formed by a battery isolated from the vehicle battery system.

7. The impact safety system according to any one of the preceding claims, wherein said body element (5, 25) is a bonnet (5), fender, grille (25), trunk, door, roof or the like, or portions thereof.

8. The impact safety system according to claim 7, wherein said body element (5, 25) is a bonnet (5), and in that said body element support arrangement (15) is a pivot arrangement arranged to said bonnet (5), or a bump stop, and in that said connection element (16, 16',16") is an element of said pivot arrangement or bump stop.

9. The impact safety system according to any one of the preceding claims, wherein said connection element (16, 16',16") is a mechanical fastening element such as a pin, a bolt, screw, a rivet, preferably a connection pin (16, 16', 16").

10. The impact safety system according to any one of the preceding claims, wherein said stiffness can be controlled as a function of the vehicle speed.

11. The impact safety system according to any one of the preceding claims, wherein stiffness can be controlled as a function of a detected possible collision.

12. The impact safety system according to any one of the preceding claims, wherein said electronic control unit (4) is adapted to communicate with a vehicle on board computer.

13. A vehicle comprising the impact safety system according to any one of the preceding claims.

14. A method for adapting an impact safety system (10) as a function of a sensor (3), said impact safety system (10) comprising a body element (5, 25) and a body element support arrangement (15, 20, 30) adapted to support said body element (5, 25), said body element support arrangement (15, 20, 30) comprising a connection element (16, 16',16") arranged in working cooperation with said body element support arrangement (15, 20, 30), said impact safety system (10) further comprising an electronic control unit (4) and at least one sensor (3),
**characterized in that**
said connection element (16, 16',16") is formed by a material with controllable stiffness, and **in that** said electronic control unit (4) is adapted to control the stiffness of said connection element (16, 16',16") as a function of a signal from said at least one sensor (3).

15. The method according to claim 14, whereby said at least one sensor (3) is a vehicle related sensor or an ambient environment related sensor.

16. The method according to any one of the claims 14-15, whereby said method comprises the step of; controlling the stiffness of at least two connection elements (16, 16', 16"), whereby preferably said stiffness of said at least two connection elements (16, 16',16") are controlled to be different from each other, or equal to each other.
